# EUROPEAN PATENT SPECIFICATION

(11) **EP 2 893 998 B1**
(45) Date of publication and mention of the grant of the patent: **04.10.2017**
(21) Application number: 14150958.8
(22) Date of filing: 13.01.2014
(51) Int. Cl.: B23C 5/06, B23C 5/28, B23C 5/00

(54) **Toolholder with through hole**
Werkzeughalter mit Durchgangsbohrung
Porte-outil avec trou traversant

(43) Date of publication of application: 15.07.2015
(73) Proprietor: Seco Tools AB, 737 82 Fagersta (SE)
(72) Inventor: Lindgren, Mathias, 73 233 Arboga (SE)
(74) Representative: Jedlöv, Cecilia

(56) References cited:
- EP-A1- 1 415 777
- WO-A1-01/58632
- WO-A1-2008/132740
- DE-A1- 19 711 938
- DE-A1- 19 950 722
- DE-A1-102007 022 117
- FR-A1- 2 892 650
- US-B1- 7 121 770

## Description

### BACKGROUND AND SUMMARY

The present invention relates generally to toolholders.

In various machining operations, particularly metal cutting operations, substantial heat is generated where a tool contacts a workpiece. In addition, the cutting operation generates chips from the workpiece that must be removed from the site of the cutting operation to avoid damage to the workpiece or the tool. Often, cooling of the workpiece and/or tool is accomplished by directing a spray of cooling gas or liquid or lubricating liquid toward the site of the cutting operation. The gas or liquid will ordinarily, in addition to cooling the site, remove loose chips from the cutting operation. Problems with such arrangements include that they add complexity and bulk to the cutting machine, and that they make it difficult to machine smaller items or in difficult to reach locations.

Certain toolholders, such as the toolholder disclosed in FR2892650, include angled through holes therein. During rotation of the toolholders, it is possible that some air will be redirected from one surface of the toolholder to another by virtue of one edge of the angled hole catching air as the toolholder rotates and a vacuum developing at the other edge of the angled hole. To the extent that this air flow results in cooling or chip removal, it is minimal. US7121770, on which the preamble of claim 1 is based, discloses a toolholder with through holes that appear to be of different size at each surface. Each through hole exits in a cylindrical side surface

It is desirable to provide a simple solution to the need for providing cooling and chip removal during a cutting operation. It is also desirable to provide such a solution that does not add to the complexity or bulk of the cutting tool. For large diameter milling cutters it is further desirable to reduce weight of the toolholders.

In accordance with the present invention, a toolholder is provided having the features of claim 1.

Such a toolholder can provide for cooling and flushing of chips around a cutting edge and from the site of a cutting operation on a workpiece without adding at all to the size or weight of the cutting tool.

### BRIEF DESCRIPTION OF THE DRAWINGS

The features and advantages of the present invention are well understood by reading the following detailed description in conjunction with the drawings in which like numerals indicate similar elements and in which:
FIG. 1A is a side plan view of a toolholder according to an aspect of the present invention;
FIG. 1B is a bottom plan view of a toolholder according to an aspect of the present invention;
FIGS. 2A-2C are top perspective, side plan, and top plan views of a toolholder according to another aspect of the present invention;
FIGS. 3A-3B are top perspective and side plan views of a toolholder according to another aspect of the present invention; and
FIGS. 4A-4B are top plan and partial top perspective views of a toolholder according to another aspect of the present invention.

### DETAILED DESCRIPTION

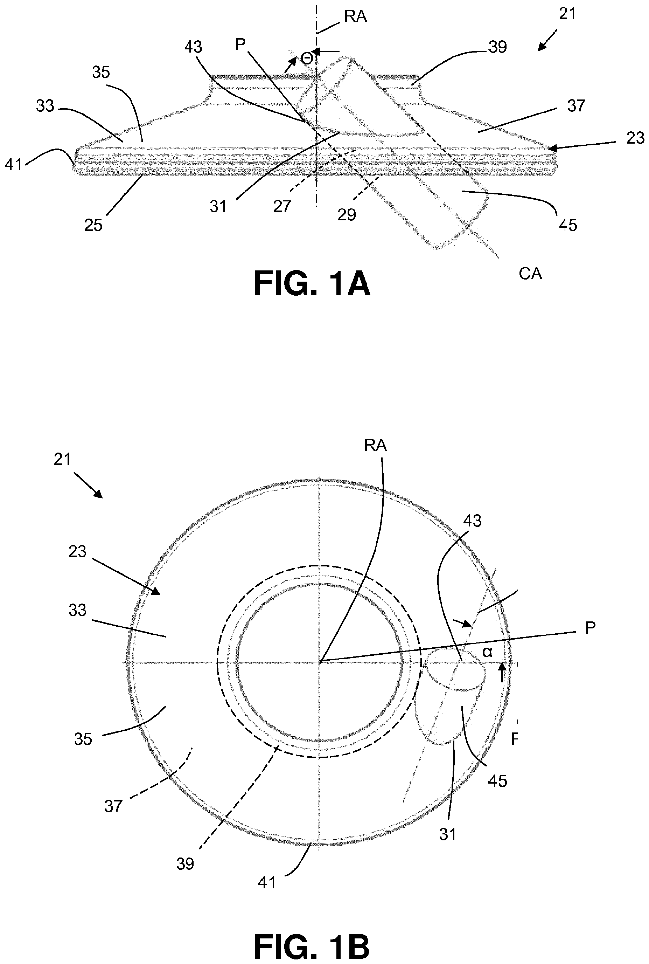

FIGS. 1A-1B show basic geometrical features of a toolholder 21 according to an aspect of the present invention for a rotating tool such as a milling tool or a boring or drilling tool. The toolholder 21 comprises a body 23 that ordinarily includes or is adapted to include one or more cutting edges (not shown in FIGS. 1A-1B) that can be formed integrally on the body or, more typically, are on replaceable cutting inserts that are removably mounted to the body. The body 23 is rotatable about an axis RA of rotation in a cutting direction, which depends upon the orientation of the cutting edges on the toolholder. The body 23 has a bottom surface 25 that is substantially perpendicular to the axis RA of rotation for facing a workpiece (not shown).

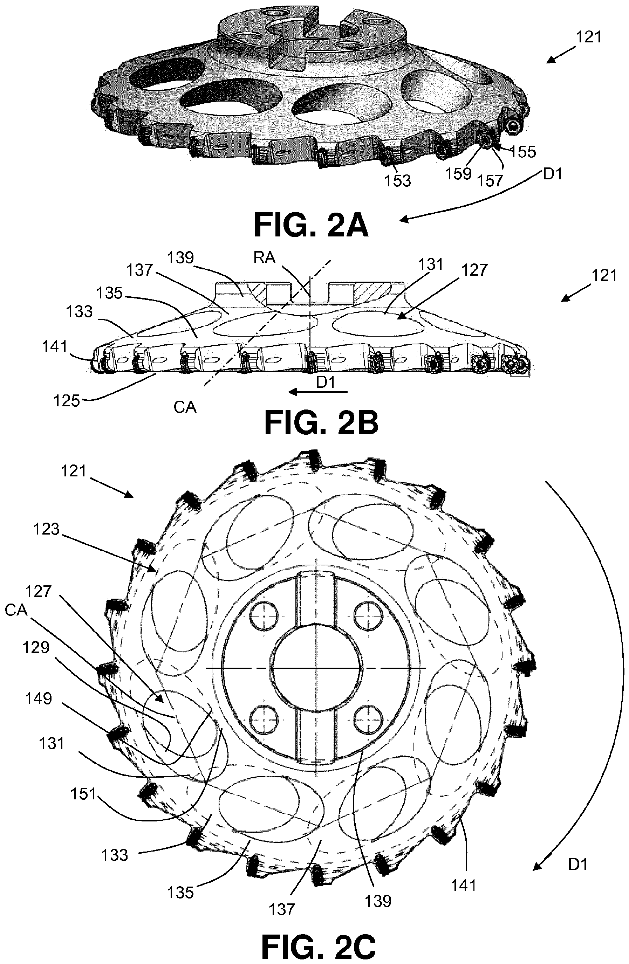

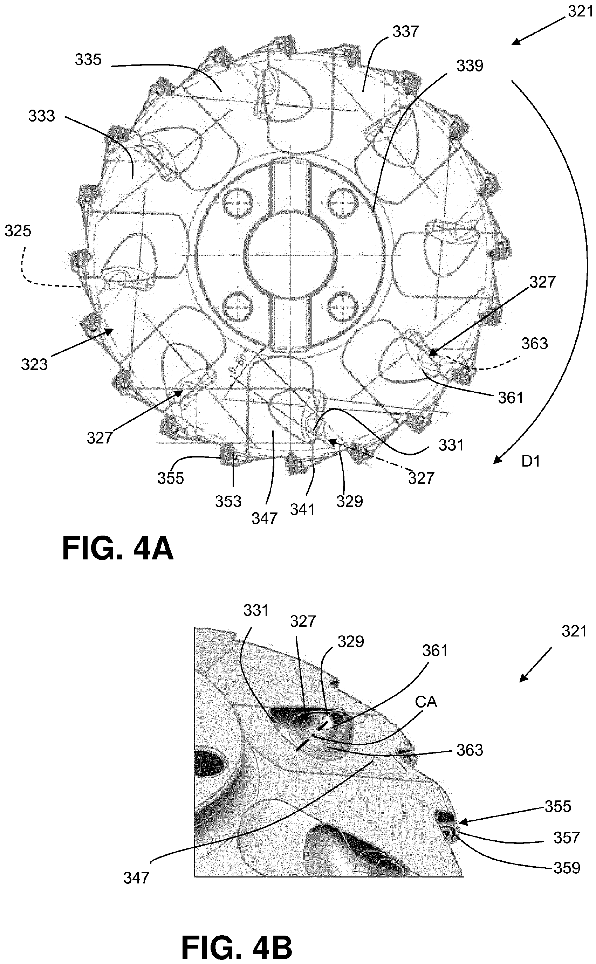

At least one through hole 27 and, more typically, as seen in FIGS. 2A-4B, a plurality of through holes, is provided in the body 23. The at least one through hole 27 has a first end 29 at a first surface of the body 23. In the embodiments shown in FIGS. 1A-3B, the first end of the at least one through hole is on the bottom surface. In the embodiment shown in FIGS. 4A-4B, the first end 329 of the at least one through hole 327 is in the edge surface 341 between a top surface 335 and a bottom surface 325.

Referring, for purposes of discussion, to the embodiment of FIGS. 1A-1B, the at least one through hole 27 has a second end 31 at a surface 33 of the body 23 above the bottom surface. The surface 33 of the body 23 above the bottom surface 25 is shown in FIGS. 1A-4B as being disposed on a top surface 35 of a head portion 37 of the toolholder 21. In the illustrated embodiments, the toolholder 21 includes a shaft portion 39 and the head portion 37 at an end of the shaft portion. The top surface 35 and the bottom surface 25 are separated by an edge surface 41. In these illustrated embodiments, the surface 33 of the body 23 above the bottom surface 25 in which the second end 31 of the at least one through hole 27 is disposed is the top surface 35, and the top surface is non-parallel to the bottom surface. However, it will be appreciated that the surface 33 of the body 23 above the bottom surface 25 can take other forms, such as being an edge surface, particularly when the edge surface is of greater height than the edge surface 41 illustrated in the embodiments shown in FIGS. 1A-4B, or being a top surface that is parallel to the bottom surface.

A central axis CA of the at least one through hole 27 intersects or is non-parallel to a plane P extending through the axis RA of rotation and tangent at a point 43 to the second end 31 of the at least one through hole. By angling the central axis CA of the at least one through hole 27, it is possible to alter air pressure at an end of the at least one through hole so as to develop a vacuum (i.e. reduced air pressure) or a higher pressure zone.

As seen in the toolholder 121 shown in FIGS. 2A-2C, the central axis CA (FIG. 2B) of the at least one through hole 127 can be angled so that the second end 131 of the at least one through hole is disposed behind the first end 129 of the at least one through hole in the cutting direction D1. By this configuration, when the toolholder 121 is rotated in the cutting direction D1, a lower pressure is developed at the second end 131 of the at least one through hole 127 so that a suction effect occurs. This can be useful for purposes such as facilitating removal of chips or other stray matter from a workpiece during a cutting operation, or for facilitating keeping the toolholder 121 in close contact with the workpiece. As seen in FIG. 2B-2C, the toolholder 121 also includes a body 123, a bottom surface 125 (FIG. 2B), a surface 133 above the bottom surface where the second end 131 of the at least one through hole 127 is disposed (i.e., the top surface 135), a head portion 137, a shaft portion 139, and an edge portion 141.

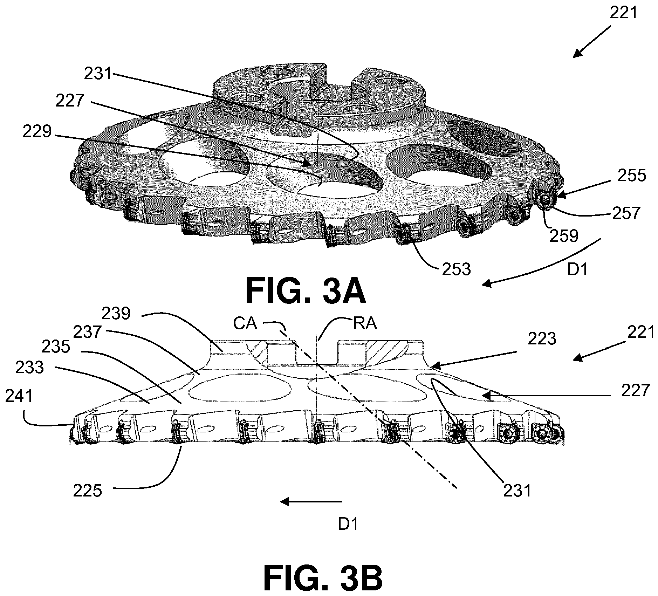

As seen in the toolholder 221 shown in FIGS. 3A-3B, the central axis CA of the at least one through hole 227 can be angled so that the second end 231 of the at least one through hole is disposed ahead of the first end 229 of the at least one through hole in the cutting direction D1. By this configuration, when the toolholder 221 is rotated in the cutting direction D1, an upper side of the through hole functions similar to a propeller as the second end 131 of the at least one through hole 127 is moved in the cutting direction and a higher pressure develops at the first end 229 of the at least one through hole. This can be useful for purposes such as cooling of the toolholder 221 and/or the workpiece, particularly those portions of the workpiece that are covered by the toolholder. The toolholder 221 also includes a body 223, a bottom surface 225, a surface 233 above the bottom surface where the second end 231 of the at least one through hole 227 is disposed (i.e., the top surface 235), a head portion 237, a shaft portion 239, and an edge portion 241.

The toolholders 21, 121, and 221 all have at least one through hole 27, 127, and 227 that defines part of a circular cylinder 45 (FIGS. 1A-1B). In other words, the at least one through hole 27, 127, and 227 is circular when viewed along its central axis CA. This shape facilitates providing the through hole by a simple operation such as drilling. Where this circular cylinder intersects with the bottom surface 25 and the surface 33 above the bottom surface, the circular cylinder defines a non-circular, elliptical or nearly elliptical shape.

As seen in FIGS. 4A-4B, however, the at least one through hole 327 need not define part of a circular cylinder and may have a non-circular or non-elliptical shape when viewed along its central axis CA. In the embodiment shown in FIGS. 4A-4B, the at least one through hole 327 has a different size at the first end than at the second end, more particularly, the at least one through hole is smaller at the first end 329 than at the second end 331. The at least one through hole 27, 127, and 227 of the toolholders 21, 121, and 221 can also be different sizes at their first and second ends 29, 129, 229 and 31, 131, 231. All of the though holes 27, 127, 227, and 327 can be different sizes and/or shapes at their first and second ends 29, 129, 229, 329 and 31, 131, 231, 331. The toolholder 321 also includes a body 323, a bottom surface 325, a surface 333 above the bottom surface where the second end 331 of the at least one through hole 327 is disposed (i.e., the top surface 335), a head portion 337, a shaft portion 339, and an edge portion 341.

In the embodiment shown in FIGS. 4A-4B, a radial groove 347 extends inward from the edge surface 341 along the top surface 335 of the body 323. The second end 331 of the at least one through hole 327 is at least partially or, as shown, entirely disposed in the radial groove 347. The first end 329 of the at least one through hole 327 is disposed in an edge surface 341 of the body 323, rather than in the bottom surface and exits ahead of the rake face 359 of a cutting insert 355 in the direction of cutting D1. This positioning of the first end 329 of the at least one through hole 327 facilitates cooling of the insert 355 and the workpiece, and facilitates removal of chips formed by cutting the workpiece. The radial groove 347 can facilitate introduction of air into the at least one through hole 327. The at least one through hole 327 has an enlarged portion 361 at the second end 331 where it opens into the radial groove 347, and a narrower portion 363 between the enlarged portion and the first end 329. The narrower portion 363 can have a conical shape that decreases in diameter toward the first end 329, with a cone angle between 0.1-80 degrees.

Referring to FIGS. 1A-1B for purposes of discussion, as seen in FIG. 1A, the central axis CA of the at least one through hole 27 defines with the plane P extending through the axis RA of rotation and tangent to the second end 31 of the hole at the point 43 an angle Θ between 10-80 degrees, more preferably between 30-60 degrees, and still more preferably between 40-50 degrees, when viewed from a side of the toolholder 21 along the plane P. In a particularly preferred embodiment, the angle Θ is 45 degrees. As seen in FIG. 1B, the central axis CA of the at least one through hole 27 also defines with the plane P extending through the axis RA of rotation and tangent to the second end 31 of the at least one through hole 27 at the point 43 an angle α between 45-75 degrees, more preferably between 50-70 degrees, and still more preferably between 55-65 degrees, when viewed from a top of the toolholder 21 along the plane.

As seen in FIGS. 2B, but applicable to any of the illustrated embodiments, a radially innermost point 149 of the at least one through hole 127 at the first end 129 of the at least one through hole can be disposed at a same distance to the axis RA of rotation as a radially innermost point 151 of the at least one through hole at the second end 131 of the at least one through hole. It will be appreciated, however, that the through holes can instead be angled or shaped so that a radially innermost point at the second end is radially closer to or farther from the axis of rotation than a radially innermost point at the first end of the at least one through hole. As seen in FIG. 4A, for example, the at least one through hole 327 is angled and shaped so that a radially innermost point 349 of the at least one through hole at the first end 329 of the at least one through hole is disposed at a greater distance to the axis RA of rotation than a radially innermost point 351 of the at least one through hole at the second end 331 of the at least one through hole.

As seen with reference to any of the embodiments shown in FIGS. 2A, 3A, and 4A, the toolholder 121, 221, 321 can comprise at least one recess 153, 253, 353 for receiving a cutting insert 155, 255, 355, the cutting insert comprising at least one cutting edge 157, 257, 357. The cutting insert 155, 255, 355 is mounted on the toolholder 121, 221, 321 so that a rake face 159, 259, 359 of the cutting insert faces the cutting direction D1.

Thus, the presently claimed toolholders having through holes for altering air pressure presents a simple solution to the need for providing cooling and chip removal during a cutting operation. The proposed solution may be extra beneficial for larger milling cutters with diameters of 150 mm to 1000 mm to reduce the weight of the toolholders.

In the present application, the use of terms such as "including" is open-ended and is intended to have the same meaning as terms such as "comprising" and not preclude the presence of other structure, material, or acts. Similarly, though the use of terms such as "can" or "may" is intended to be open-ended and to reflect that structure, material, or acts are not necessary, the failure to use such terms is not intended to reflect that structure, material, or acts are essential. To the extent that structure, material, or acts are presently considered to be essential, they are identified as such.

While this invention has been illustrated and described in accordance with preferred embodiments, it is recognized that variations and changes may be made therein without departing from the invention as set forth in the claims.

## Claims

1. A toolholder (21, 121, 221, 321) for a rotating tool, comprising:
a body (23, 123, 223, 323) that is rotatable about an axis (RA) of rotation in a cutting direction (D1), the body (23, 123, 223, 323) having a first surface (25, 125, 225, 341) that faces a workpiece; wherein the body (23, 123, 223, 323) includes a shaft portion (39, 139, 239, 339) and a head portion (37, 137, 237, 337) at an end of the shaft portion (39, 139, 239, 339), the first surface (25, 125, 225, 341) being disposed on the head portion (37, 137, 237, 337), the head portion (37, 137, 237, 337) including a top surface (35, 135, 235, 335), a bottom surface (25, 125, 225, 325), and an edge surface (41, 141, 241, 341) between the top surface (35, 135, 235, 335) and the bottom surface (25, 125, 225, 325),
at least one through hole (27, 127, 227, 327) having a first end (29, 129, 229, 329) at the first surface (25, 125, 225, 341) and a second end (31, 131, 231, 331) at a surface (33, 133, 233, 333) of the body (23, 123, 223, 323) above the first surface (25, 125, 225, 341),
wherein a central axis (CA) of the at least one through hole (27, 127, 227, 327) intersects a plane (P) extending through the axis (RA) of rotation and tangent to the second end (31, 131, 231, 331) of the at least one through hole (27, 127, 227, 327),
and wherein the at least one through hole (327) has a different size at the first end (329) than at the second end (331), **characterized in that** the second end (31, 131, 231, 331) of the at least one through hole (27, 127, 227, 327) is disposed on the top surface (35, 135, 235, 335) of the head portion (37, 137, 237, 337).

2. The toolholder (21, 121, 221, 321) as set forth in claim 1, wherein the top surface (35, 135, 235, 335) is non-parallel with the bottom surface (25, 125, 225, 325).

3. The toolholder (321) as set forth in any of claims 1 or 2, comprising a radial groove (347) extending inward from the edge surface (41, 141, 241, 341) along the top surface (35, 135, 235, 335) of the body (23, 123, 223, 323), the second end (31, 131, 231, 331) of the at least one through hole (27, 127, 227, 327) being disposed in the radial groove.

4. The toolholder (321) as set forth in any of claims 1-3, wherein the at least one through hole (327) is smaller at the first end (329) than at the second end (331).

5. The toolholder (21, 121, 221, 321) as set forth in any of claims 1-4, wherein the central axis (CA) of the at least one through hole (27, 127, 227, 327) defines with the plane (P) extending through the axis (RA) of rotation and tangent to the second end (31, 131, 231, 331) of the hole (27, 127, 227, 327) an angle between 10-80 degrees, more preferably between 30-60 degrees, and still more preferably between 40-50 degrees, when viewed from a side of the toolholder (21, 121, 221, 321) along the plane (P).

6. The toolholder (21, 121, 221, 321) as set forth in any of claims 1-5, wherein the central axis (CA) of the at least one through hole (27, 127, 227, 327) defines with the plane (P) extending through the axis (RA) of rotation and tangent to the second end (31, 131, 231, 331) of the hole (27, 127, 227, 327) an angle between 45-75 degrees, more preferably between 50-70 degrees, and still more preferably between 55-65 degrees, when viewed from a top of the toolholder (21, 121, 221, 321) along the plane (P).

7. The toolholder (21, 121, 221, 321) as set forth in any of claims 1-6, wherein the body (23, 123, 223, 323) includes a bottom surface (25, 125, 225, 325), a top surface (35, 135, 235, 335), and an edge surface (41, 141, 241, 341) between the top surface (35, 135, 235, 335) and the bottom surface (25, 125, 225, 325), the first end (29, 129, 229, 329) of the at least one through hole (27, 127, 227, 327) being disposed in at least one of the bottom surface (25, 125, 225) and the edge surface (341).

8. The toolholder (21, 121, 221) as set forth in any of claims 1-7, wherein the at least one through hole (27, 127, 227) is elliptical at the first end (29, 129, 229) and at the second end (31, 131, 231).

9. The toolholder (21, 121, 221) as set forth in any of claims 1-8, wherein a radially innermost point of the at least one through hole (27, 127, 227) at the first end (29, 129, 229) of the at least one through hole (27, 127, 227) is disposed at a same distance to the axis (RA) of rotation as a radially innermost point of the at least one through hole (27, 127, 227) at the second end (31, 131, 231) of the at least one through hole (27, 127, 227).

10. The toolholder (321) as set forth in any of claims 1-7, wherein a radially innermost point of the at least one through hole (327) at the first end (329) of the at least one through hole (327) is disposed at a different distance to the axis (RA) of rotation as a radially innermost point of the at least one through hole (327) at the second end (331) of the at least one through hole (327).

11. The toolholder (321) as set forth in any of claims 1-10, wherein the at least one through hole (327) is non-circular when viewed along its central axis (CA).

12. The toolholder (121) as set forth in any of claims 1-11, wherein the central axis (CA) of the at least one through hole (127) is angled so that the second end (131) of the at least one through hole (127) is disposed behind the first end (129) of the at least one through hole (127) in the cutting direction (D1).

13. The toolholder (221, 321) as set forth in any of claims 1-12, wherein the central axis (CA) of the at least one through hole (227, 327) is angled so that the second end (231, 331) of the at least one through hole (227, 327) is disposed ahead of the first end (229, 329) of the at least one through hole (227, 327) in the cutting direction (D1).

## Patentansprüche

1. Werkzeughalter (21, 121, 221, 321) für ein rotierendes Werkzeug, welcher aufweist:
einen Hauptteil (23, 123, 223, 323), der um eine Rotationsachse (RA) in einer Schneidrichtung (D1) drehbar ist, wobei der Hauptteil (23, 123, 223, 323) eine erste Fläche (25, 125, 225, 341) hat, die einem Werkstück zugewandt ist, wobei der Hauptteil (23, 123, 223, 323) einen Schaftabschnitt (39, 139, 239, 339) und einen Kopfabschnitt (37, 137, 237, 337) an einem Ende des Schaftabschnitts (39, 139, 239, 339) hat, wobei die erste Fläche (25, 125, 225, 341) an dem Kopfabschnitt (37, 137, 237, 337) angeordnet ist, wobei der Kopfabschnitt (37, 137, 237, 337) eine Oberseite (35, 135, 235, 335), eine Unterseite (25, 125, 225, 325) und eine Randfläche (41, 141, 241, 341) zwischen der Oberseite (35, 135, 235, 335) und der Unterseite (25, 125, 225, 325) hat,
wobei zumindest eine Durchgangsbohrung (27, 127, 227, 327) ein erstes Ende (29, 129, 229, 329) an der ersten Fläche (25, 125, 225, 325) und ein zweites Ende (31, 131, 231, 331) an einer Fläche (33, 133, 233, 333) des Hauptteils (23, 123, 223, 323) oberhalb der ersten Fläche (25, 125, 225, 325) hat, wobei eine zentrale Achse (CA) der zumindest einen Durchgangsbohrung (27, 127, 227, 327) eine Ebene (P) schneidet, welche sich durch die Rotationsachse (RA) und eine Tangente an das zweite Ende (31, 131, 231, 331) der zumindest einen Durchgangsbohrung (27, 127, 227, 327) erstreckt,
und wobei die zumindest eine Durchgangsbohrung (327) ein anderes Maß am ersten Ende (329) als am zweiten Ende (331) hat, **dadurch gekennzeichnet, dass** das zweite Ende (31, 131, 231, 331) der zumindest einen Durchgangsbohrung (27, 127, 227, 327) an der Oberseite (35, 135, 235, 335) des Kopfschnittes (37, 137, 237, 337) angeordnet ist.

2. Werkzeughalter (21, 121, 221, 321) nach Anspruch 1, wobei die Oberseite (35, 135, 235, 335) nicht parallel zu der Unterseite (25, 125, 225, 325) ist.

3. Werkzeughalter (21, 121, 221, 321) nach einem der Ansprüche 1 oder 2, welcher eine radiale Nut aufweist, die sich von der Randfläche (41, 141, 241, 341) entlang der Oberseite (35, 135, 235, 335) des Hauptteils (23, 123, 223, 323) nach innen erstreckt, wobei das zweite Ende (31, 131, 231, 331) der zumindest einen Durchgangsbohrung (27, 127, 227, 327) in der radialen Nut angeordnet ist.

4. Werkzeughalter (21, 121, 221, 321) nach einem der Ansprüche 1 bis 3, wobei die zumindest eine Durchgangsbohrung (27, 127, 227, 327) am ersten Ende (329) kleiner als am zweiten Ende (331) ist.

5. Werkzeughalter (21, 121, 221, 321) nach einem der Ansprüche 1 bis 4, wobei die zentrale Achse (CA) der zumindest einen Durchgangsbohrung (27, 127, 227, 327) mit der Ebene (P), welche sich durch die Rotationsachse (RA) und eine Tangente an das zweite Ende (31, 131, 231, 331) der Bohrung (27, 127, 227, 327)) erstreckt, einen Winkel zwischen 10 und 80 Grad definiert, bevorzugter zwischen 30 und 60° und noch bevorzugter zwischen 40 und 50°, gesehen von einer Seite des Werkzeughalters (21, 121, 221, 321) entlang der Ebene (P).

6. Werkzeughalter (21, 121, 221, 321) nach einem der Ansprüche 1 bis 5, wobei die zentrale Achse (CA) der zumindest einen Durchgangsbohrung (27, 127, 227, 327) mit der Ebene (P), die sich durch die Rotationsachse (RA) und eine Tangente an das zweite Ende (31, 131, 231, 331) der Bohrung (27, 127, 227, 327) erstreckt, einen Winkel zwischen 45 und 75°, bevorzugter zwischen 50 und 70° und noch bevorzugter zwischen 55 und 65° definiert, gesehen von der Oberseite (35, 135, 235, 335) des Werkzeughalters (21, 121, 221, 321) entlang der Ebene (P).

7. Werkzeughalter (21, 121, 221, 321) nach einem der Ansprüche 1 bis 6, wobei der Hauptteil (23, 123, 223, 323) eine Unterseite (25, 125, 225, 325), eine Oberseite (35, 135, 235, 335) und eine Randfläche zwischen der Oberseite (35, 135, 235, 335) und der Unterseite (25, 125, 225, 325) aufweist, wobei das erste Ende an der Unterseite und/oder der Randfläche angeordnet ist.

8. Werkzeughalter (21, 121, 221, 321) nach einem der Ansprüche 1 bis 7, wobei die zumindest eine Durchgangsbohrung (27, 127, 227, 327) am ersten Ende (29, 129, 229, 329) und am zweiten Ende (31, 131, 231, 331) elliptisch ist.

9. Werkzeughalter (21, 121, 221, 321) nach einem der Ansprüche 1 bis 8, wobei ein radial am weitesten innenliegender Punkt der zumindest einen Durchgangsbohrung (27, 127, 227, 327) an dem ersten Ende (29, 129, 229, 329) der zumindest einen Durchgangsbohrung (27, 127, 227, 327) unter demselben Abstand zu der Rotationsachse (RA) angeordnet ist, wie ein radial am weitesten innenliegender Punkt der zumindest einen Durchgangsbohrung (27, 127, 227, 327) an dem zweiten Ende (31, 131, 231, 331) der zumindest einen Durchgangsbohrung (27, 127, 227, 327).

10. Werkzeughalter (21, 121, 221, 321) nach einem der Ansprüche 1 bis 7, wobei ein radial am weitesten innenliegender Punkt der zumindest einen Durchgangsbohrung (27, 127, 227, 327) an dem ersten Ende (29, 129, 229, 329) der zumindest einen Durchgangsbohrung (27, 127, 227, 327) in einem anderen Abstand zu der Rotationsachse (RA) angeordnet ist als ein radial am weitesten innenliegender Punkt der zumindest einen Durchgangsbohrung (27, 127, 227, 327) am zweiten Ende (31, 131, 231, 331) der zumindest einen Durchgangsbohrung (27, 127, 227, 327).

11. Werkzeughalter (21, 121, 221, 321) nach einem der Ansprüche 1 bis 10, wobei die zumindest eine Durchgangsbohrung (27, 127, 227, 327) entlang ihrer zentralen Achse (CA) gesehen nicht kreisförmig ist.

12. Werkzeughalter (21, 121, 221, 321) nach einem der Ansprüche 1 bis 11, wobei die zentrale Achse (CA) der zumindest einen Durchgangsbohrung (27, 127, 227, 327) abgewinkelt ist, sodass das zweite Ende (31, 131, 231, 331) der zumindest einen Durchgangsbohrung (27, 127, 227, 327) in Schneidrichtung (D1) hinter dem ersten Ende (29, 129, 229, 329) der zumindest einen Durchgangsbohrung (27, 127, 227, 327) angeordnet ist.

13. Werkzeughalter (21, 121, 221, 321) nach einem der Ansprüche 1 bis 12, wobei die Zentralachse (CA) der zumindest einen Durchgangsbohrung (27, 127, 227, 327) abgewinkelt ist, sodass das zweite Ende (31, 131, 231, 331) der zumindest einen Durchgangsbohrung (27, 127, 227, 327) in Schneidrichtung (D1) vor dem ersten Ende (29, 129, 229, 329) der zumindest einen Durchgangsbohrung (27, 127, 227, 327) angeordnet ist.

## Revendications

1. Porte-outil (21, 121, 221, 321) pour un outil rotatif, comprenant :
un corps (23, 123, 223, 323) qui peut tourner autour d'un axe (RA) de rotation dans un sens de coupe (D1), le corps (23, 123, 223, 323) ayant une premier surface (25, 125, 225, 341) qui est tournée vers une pièce à usiner ; dans lequel le corps (23, 123, 223, 323) inclut une partie d'axe (39, 139, 239, 339) et une partie de tête (37, 137, 237, 337) à une extrémité de la partie d'axe (39, 139, 239, 339), la première surface (25, 125, 225, 341) étant disposée sur la partie de tête (37, 137, 237, 337), la partie de tête (37, 137, 237, 337) incluant une surface supérieure (35, 135, 235, 335), une surface inférieure (25, 125, 225, 325), et une surface d'arête (41, 141, 241, 341) entre la surface supérieure (35, 135, 235, 335) et la surface inférieure (25, 125, 225, 325),
au moins un trou traversant (27, 127, 227, 327) ayant une première extrémité (29, 129, 229, 329) au niveau de la première surface (25, 125, 225, 341) et une deuxième extrémité (31, 131, 231, 331) au niveau d'une surface (33, 133, 233, 333) du corps (23, 123, 223, 323) au-dessus de la première surface (25, 125, 225, 341),
dans lequel un axe central (CA) du au moins un trou traversant (27, 127, 227, 327) coupe un plan (P) s'étendant à travers l'axe (RA) de rotation et tangent au niveau de la deuxième extrémité (31, 131, 231, 331) du au moins un trou traversant (27, 127, 227, 327),
et dans lequel le au moins un trou traversant (327) a une dimension différente au niveau de la première extrémité (329) par rapport à la deuxième extrémité (331), **caractérisé en ce que** la deuxième extrémité (31, 131, 231, 331) du au moins un trou traversant (27, 127, 227, 327) est disposée sur la surface supérieure (35, 135, 235, 335) de la partie de tête (37, 137, 237, 337).

2. Porte-outil (21, 121, 221, 321) selon la revendication 1, dans lequel la surface supérieure (35, 135, 235, 335) est non parallèle à la surface inférieure (25, 125, 225, 325).

3. Porte-outil (321) selon l'une quelconque des revendications 1 ou 2, comprenant une rainure radiale (347) s'étendant vers l'intérieur par rapport à la surface d'arête (41, 141, 241, 341) le long de la surface supérieure (35, 135, 235, 335) du corps (23, 123, 223, 323), la deuxième extrémité (31, 131, 231, 331) du au moins un trou traversant (27, 127, 227, 327) étant disposée dans la rainure radiale.

4. Porte-outil (321) selon l'une quelconque des revendications 1 à 3, dans lequel le au moins un trou traversant (327) est plus petit au niveau de la première extrémité (329) qu'au niveau de la deuxième extrémité (331).

5. Porte-outil (21, 121, 221, 321) selon l'une quelconque des revendications 1 à 4, dans lequel l'axe central (CA) du au moins un trou traversant (27, 127, 227, 327) définit avec le plan (P) s'étendant à travers l'axe (RA) de rotation et tangent au niveau de la deuxième extrémité (31, 131, 231, 331) du trou (27, 127, 227, 327) un angle entre 10 et 80 degrés, davantage de préférence entre 30 et 60 degrés, et de façon encore davantage préférée entre 40 et 50 degrés, comme observé sur le côté du porte-outil (21, 121, 221, 321) le long du plan (P).

6. Porte-outil (21, 121, 221, 321) selon l'une quelconque des revendications 1 à 5, dans lequel l'axe central (CA) du au moins un trou traversant (27, 127, 227, 327) définit avec le plan (P) s'étendant à travers l'axe (RA) de rotation et tangent au niveau de la deuxième extrémité (31, 131, 231, 331) du trou (27, 127, 227, 327) un angle entre 45 et 75 degrés, davantage de préférence entre 50 et 70 degrés, et de façon encore davantage préférée entre 55 et 65 degrés, comme observé sur le dessus du porte-outil (21, 121, 221, 321) le long du plan (P).

7. Porte-outil (21, 121, 221, 321) selon l'une quelconque des revendications 1 à 6, dans lequel le corps (23, 123, 223, 323) inclut une surface inférieure (25, 125, 225, 325), une surface supérieure (35, 135, 235, 335), et une surface d'arête (41, 141, 241, 341) entre la surface supérieure (35, 135, 235, 335) et la surface inférieure (25, 125, 225, 325), la première extrémité (29, 129, 229, 329) du au moins un trou traversant (27, 127, 227, 327) étant disposée dans au moins l'une de la surface inférieure (25, 125, 225, 325) et de la surface d'arête (341).

8. Porte-outil (21, 121, 221) selon l'une quelconque des revendications 1 à 7, dans lequel le au moins un trou traversant (27, 127, 227) est elliptique au niveau de la première extrémité (29, 129, 229) et au niveau de la deuxième extrémité (31, 131, 231).

9. Porte-outil (21, 121, 221) selon l'une quelconque des revendications 1 à 8, dans lequel un point le plus vers l'intérieur radialement du au moins un trou traversant (27, 127, 227) au niveau de la première extrémité (29, 129, 229) du au moins un trou traversant (27, 127, 227) est disposé à la même distance par rapport à l'axe (RA) de rotation qu'un point le plus vers l'intérieur radialement du au moins un trou traversant (27, 127, 227) au niveau de la deuxième extrémité (31, 131, 231) du au moins un trou traversant (27, 127, 227).

10. Porte-outil (321) selon l'une quelconque des revendications 1 à 7, dans lequel un point le plus vers l'intérieur radialement du au moins un trou traversant (327) au niveau de la première extrémité (329) du au moins un trou traversant (327) est disposé à une distance différente par rapport à l'axe (RA) de rotation par rapport à un point le plus vers l'intérieur radialement du au moins un trou traversant (327) au niveau de la deuxième extrémité (331) du au moins un trou traversant (327).

11. Porte-outil (321) selon l'une quelconque des revendications 1 à 10, dans lequel le au moins un trou traversant (327) est non circulaire comme observé le long de son axe central (CA).

12. Porte-outil (121) selon l'une quelconque des revendications 1 à 11, dans lequel l'axe central (CA) du au moins un trou traversant (127) est incliné de sorte que la deuxième extrémité (131) du au moins un trou traversant (127) soit disposée derrière la première extrémité (129) du au moins un trou traversant (127) dans le sens de coupe (D1).

13. Porte-outil (221, 321) selon l'une quelconque des revendications 1 à 12, dans lequel l'axe central (CA) du au moins un trou traversant (227, 327) est incliné de sorte que la deuxième extrémité (231, 331) du au moins un trou traversant (227, 327) soit disposée devant la première extrémité (229, 329) du au moins un trou traversant (227, 327) dans le sens de coupe (D1).
